**Europäisches Patentamt**

**European Patent Office**

**Office européen des brevets**

(19)

(11) Veröffentlichungsnummer: **0 017 612**

**A1**

(12) # EUROPÄISCHE PATENTANMELDUNG

(21) Anmeldenummer: **80810065.5**

(22) Anmeldetag: **22.02.80**

(51) Int. Cl.³: **C 25 C 3/14**
**G 01 F 11/18, G 01 F 11/24**

(30) Priorität: **02.03.79 CH 2064/79**

(43) Veröffentlichungstag der Anmeldung:
**15.10.80 Patentblatt 80/21**

(84) Benannte Vertragsstaaten:
**AT CH DE FR GB IT NL**

(71) Anmelder: **Schweizerische Aluminium AG**

**CH-8212 Neuhausen am Rheinfall(CH)**

(72) Erfinder: **Rebmann, Hans-Jörg**
**La Pelouse 8**
**CH-1950 Sion(CH)**

(72) Erfinder: **Müller, Theo**
**Dammstrasse 21**
**CH-4313 Möhlin(CH)**

(54) **Vorrichtung zur kontinuierlichen Tonerdezuführung mittels einer Dosiervorrichtung.**

(57) Bei einer Vorrichtung zum dosierten Zuführen von Tonerde zum Krustendurchbruch (18) einer Elektrolysezelle mit in einem stehenden Kanal (35) bewegten, an einem Antrieb (32) und einem Tonerdesilo (26) angeschlossenen Förderorgan, ist der Kanal (35) als unter einer Einfüllöffnung (31) vorgesehenes Führungsrohr (29) für ein Kolbensystem (35) ausgebildet, welches wenigstens eine Einformung als begrenzten Dosierraum (40) aufweist. Dieser Dosierraum (40) wird von einem Verschlusskolben (36) und einem Dosierkolben (37) bestimmt, wobei seine Breite (a) einstellbar ist und gegebenenfalls der Breite (b) der Einfüllöffnung (31) einer versetzt zur Einfüllöffnung angebrachten Austragsöffnung (42) entspricht.

Sind mehrere Dossierräume erwünscht, werden diese von einer Mehrzahl von Verschlusskolben (36) und Dosierkolben (37) gebildet. Das Kolbensystem (35) ist über ein Gestänge (38) mit einem vorzugsweise pneumatischen Antrieb (32) verbunden und hin und herbewegbar. Liegt die Austragsöffnung (42) unterhalb der Einfüllöffnung (31), so ist das Kolbensystem (35) um seine Achse (M) mittels des Antriebs (32) drehbar. Zwischen beiden Oeffnungen unterbrechen eine oder mehrere Ausnehmungen (49, 52) das Kolbensystem (35).

Die Austragsöffnung (42) mündet in einen Trichter (44), der die Tonerde dem Krustendruchbruch zuführt.

./...

EP 0 017 612 A1

Fig. 3

Vorrichtung zur kontinuierlichen Tonerdezuführung mittels
einer Dosiervorrichtung

Die Erfindung betrifft eine Vorrichtung zum dosierten Zuführen
von Tonerde zum Krustendurchbruch einer Elektrolysezelle mit
in einem stehenden Kanal bewegten, an einem Antrieb und einem
Tonerdesilo angeschlossenem Förderorgan.

Vorrichtungen zur kontinuierlichen Tonerdezugabe in das Elektrolysebad der Schmelzflusselektrolyse zur Herstellung von
Aluminium sind bereits seit etwa 50 Jahren bekannt. Sie resultieren aus der Erkenntnis, dass in dem Masse, wie das Aluminium kathodisch abgeschieden wird, Tonerde dem Bad zugeführt werden muss. Deshalb tauchte früh der Gedanke auf, an die Zugabevorrichtung für Tonerde auch eine Dosiervorrichtung zu koppeln.
Die Tonerdezufuhr erfolgt bei den bekannten Vorrichtungen mittels einer Dosierschnecke und Schubförderschnecke, einer Dosierschnecke und Druckluft, einer Dosierschnecke und Kolbenverdichter oder sie erfolgt nach dem Zuckerstreuprinzip.
Bekannt ist auch die Tonerdezufuhr mittels Schwerkraftförderer
und Fluidisierungsrinne.

Der Ort der Tonerdezufuhr variiert bei den bekannten Vorrichtungen zwischen der Tonerdezufuhr durch die Anode selbst hindurch, der Anbringung der·Tonerdezufuhrvorrichtung direkt an
der Anode (vor allem bei Söderbergöfen) und der Tonerdezufuhr
an einer beliebigen Stelle des Ofens.

Der Nachteil der bisher bekannten Dosiervorrichtungen liegt
insbesondere in der Kompliziertheit der Konstruktion und Aufwendigkeit bei der Herstellung. So bedarf insbesondere der Antrieb der Dosierschnecke einen sich kontinuierlich drehenden
Motor, der mit Elektrizität betrieben wird. Dies bringt aber
eine erhebliche Gefährdung bei seiner Benutzung an einem Elektrolyseofen mit sich.

Da Dosierschnecken zwischen sich und der sie umgebenden Wandung zur Erhaltung der Drehfreiheit einen gewissen, wenn auch minimalen Abstand einhalten, kann sich in diesen Hohlräumen Tonerde ansammeln, was insbesondere bei einigen nicht vollkommen trockenen Tonerdearten zu einem Verkleben der Schnecke führt. Daraus resultieren erhebliche Betriebsstörungen.

Zudem ist die Bestimmung der Dosiermenge mittels einer Dosierschnecke ungenau, da sich die Hohlräume zwischen zwei Schneckenwellen ungleichmässig füllen. Deshalb wird in der Praxis oftmals entweder zu wenig Tonerde zugeführt, was zu häufigeren Anodeneffekten führt, oder zuviel Tonerde in das Elektrolysebad gegeben, was die Wirtschaftlichkeit des Ofens beeinflusst.

Der Erfinder hat sich deshalb zum Ziel gesetzt, eine Vorrichtung zum dosierten Zuführen von Tonerde zum Krustendurchbruch einer Elektrolysezelle zu entwickeln, die die Nachteile der bekannten Dosiervorrichtungen vermeidet.

Zur Lösung dieses Aufgabe ist in einem unter einer Einfüllöffnung vorgesehenem Führungsrohr ein Kolbensystem ausgebildet, welches wenigstens eine Einformung als begrenzten Dosierraum aufweist.

Diese Vorrichtung ist konstruktiv denkbar einfach und unempfindlich gegen äussere Einflüsse aufgebaut.

Sie besteht im wesentlichen aus vier Bauelementen: einem Tonerdesilo, einem ein Kolbensystem beinhaltendes Führungsrohr, einem Antrieb und einem die Tonerde auffangenden und dem Krustendurchbruch zuführenden Trichter.

Das Tonerdesilo verjüngt sich zu einem Einfüllstutzen, der auf einer Einfüllöffnung des Führungsrohres aufsitzt. Innerhalb des Führungsrohres befindet sich ein über ein Gestänge mit dem Antrieb verbundenes Kolbensystem. Dem Tonerdesilo gegenüberliegend umgibt der Trichter eine Austragsöffnung, welche die der Einfüllöffnung gegenüberliegende Wandung des Führungsrohres durchbricht.

Ein wesentlicher Vorteil der Erfindung liegt in der Verwendung des im Führungsrohr bewegbaren Kolbensystems, dessen Ausgestaltung und Wirkungsweise von der Anzahl der Einfüllöffnungen und Austragsöffnungen und ihrer Lage zueinander bestimmt wird.

Eine Ausführung des Kolbensystems besteht aus einem Verschlusskolben und einem Dosierkolben, wobei zwischen beiden ein Dosierraum angeordnet ist, dessen Breite gegebenenfalls dem Durchmesser der Einfüll- und/oder der Austragsöffnung entspricht. Da dieses Kolbensystem in Richtung seiner Mittelachse mittels eines vorzugsweise pneumatisch gesteuerten Antriebs über ein beide Kolben und die Antriebsvorrichtung verbindendes Gestänge hin und her bewegt wird, sind vorteilhafterweise die Einfüllöffnung und die Austragsöffnung versetzt gegenüber liegend angeordnet. Die Arbeitsweise dieser Dosiervorrichtung sieht in der Ausgangslage vor, dass der Dosierraum unter der Einfüllöffnung liegt, so dass die Tonerde aus dem Tonerdesilo über den Einfüllstutzen durch die Einfüllöffnung in den Dosierraum fliessen kann.

Wird der Antrieb in Gang gesetzt, so verschiebt das Gestänge den Verschlusskolben, den Dosierkolben und die sich in dem Dosierraum zwischen beiden befindliche Tonerde über die Austragsöffnung, wobei gleichzeitig der Verschlusskolben die Einfüllöffnung verschliesst.

Durch die Austragsöffnung fällt die Tonerde in den Trichter, der sie dem Krustendurchbruch zuführt.

Die Erfindung umfasst aber auch eine Vorrichtung, bei der die Wandung des Führungsrohres durch mehrere Einfüll- und/oder Austragsöffnungen unterbrochen ist. Liegt auf beiden Seiten einer Einfüllöffnung versetzt je eine Austragsöffnung, so besteht das Kolbensystem aus einem Verschlusskolben und zwei Dosierkolben, die so angeordnet sind, dass jeweils ein zwischen Verschlusskolben und dem einen Dosierkolben gebildeter Dosierraum über einer Austragsöffnung liegt, wenn der andere von dem anderen Dosierkolben und dem Verschlusskolben gebildete Dosierraum die Einfüllöffnung freigibt. Diese Vorrichtung ermöglicht gegebenenfalls eine doppelte Beschickung des Ofens mit Tonerde.

Ein weiterer Vorteil der Vorrichtung liegt darin, dass durch die veränderliche Lage der Kolben an dem Gestänge zueinander die Dosiermenge mittels des Dosierraumes exakt bestimmt werden kann. Vorteilhafterweise wird deshalb auch das Kolbensystem austauschbar sein, damit die Dosiermenge auch entsprechend den unterschiedlichen Arten der Tonerde variiert werden kann.

Erfindungsgemäss ist die Form der Kolben und ihre Verbindung miteinander variabel. Der Vorzug wird der runden Form gegeben, wobei aber auch bei einer anderen geometrischen Ausgestaltung des Führungsrohres die Kolben eine andere Form annehmen können. Die Verbindung von Verschlusskolben und Dosierkolben kann mittels eines Teils des Gestänges in der Mittelachse beider Kolben erfolgen, oder durch Verbindungsstücke an den Aussenkanten der Kolben.

Liegen Einfüllöffnung und Austragsöffnung gegenüber, so ergibt sich eine andere Ausgestaltung des Kolbensystems. In diesem Fall ist das Kolbensystem mittels eines gegebenenfalls senkrecht zum Kolbensystem angeordneten Antriebs um seine Mittelachse bewegbar. Dieses Kolbensystem weist zwischen Einfüllöffnung und Austragsöffnung mindestens eine Ausnehmung auf, die den Dosierraum bildet. Die Ausnehmung wird vor allem durch das die beiden Teile des Kolbensystems verbindende Reststück bestimmt. Die Ausnehmung kann z.B. um die Kolbenmittelachse erfolgen, so dass zwei halbmondförmige Wandungen stehen bleiben. Wird bei dieser Ausgestaltung das Kolbensystem um seine Mittelachse gedreht, so verschliesst die eine halbmondförmige Wandung die Einfüllöffnung, die andere die Austragsöffnung. Beim Weiterdrehen werden Einfüll- und Austragsöffnung
wieder freigegeben, sodass die Tonerde jeweils nach dem Grade
der Drehung ungehindert durch die Ausnehmung, die Einfüll- und
die Austragsöffnung fliessen kann. Vorzugsweise wird diese
Drehbewegung ruckartig um 90$^{\circ}$ vor sich gehen, wodurch mittels
der Verweilzeit der Ausnehmung unter der Einfüll- und über der
Austragsöffnung die zuzuführende Tonerdemenge bestimmt wird.

Eine andere Variante besteht in der umgekehrten Ausführung der
Ausnehmung. Beide Kolbenteile des Kolbensystems bleiben in
der Kolbenachse durch eine Scheidewand verbunden, die so breit
ist, dass sie Einfüll- und Austragsöffnung verschliessen kann.
Die Scheidewand trennt zwei halbmondförmige Dosierräume. Dreht
sich das Kolbensystem um die Kolbenmittelachse so füllt sich
ein Dosierraum mit Tonerde. Beim weiteren Drehen werden Einfüll- und Austragsöffnung durch die Scheidewand verschlossen
und dann wieder freigegeben, wobei Tonerde in den anderen
halbmondförmigen Dosierraum fliesst, während sich der gefüllte
über der Austragsöffnung entleert.

Die Austragsöffnungen werden gegebenenfalls von einem Trichter
umfangen, der an seinem unteren Ende eine Zufuhröffnung zum
Krustendurchbruch freigibt. Vorzugsweise ist dabei die eine
Wandung des Trichters senkrecht zum Krustendurchbruch angeordnet, während die andere je nach der optimalen Fliessbewegung
der Tonerde abgeschrägt ist. Damit wird eine gezielte Zugabe
der Tonerde zum Krustendurchbruch ermöglicht.

Weitere Vorteile, Merkmale und Einzelheiten der Erfindung ergeben sich aus der nachfolgenden Beschreibung bevorzugter
Ausführungsbeispiele sowie an Hand der Zeichnung. Diese zeigt
in

Fig.1:Einen Querschnitt einer Elektrolysezelle;

Fig.2:    Einen Ausschnitt einer Elektrolysezelle nach der Schnittlinie II-II in Fig.1;

Fig.3:    Einen Querschnitt einer Dosiervorrichtung;

Fig.4:    Ein weiteres Ausführungsbeispiel nach Fig. 3;

Fig.5:    Ein weiteres Ausführungsbeispiel nach Fig. 3;

Fig.6:    Ein vergrössertes Detail einer Dosiervorrichtung in zwei Ausführungsbeispielen geschnitten nach Linie VI-VI;

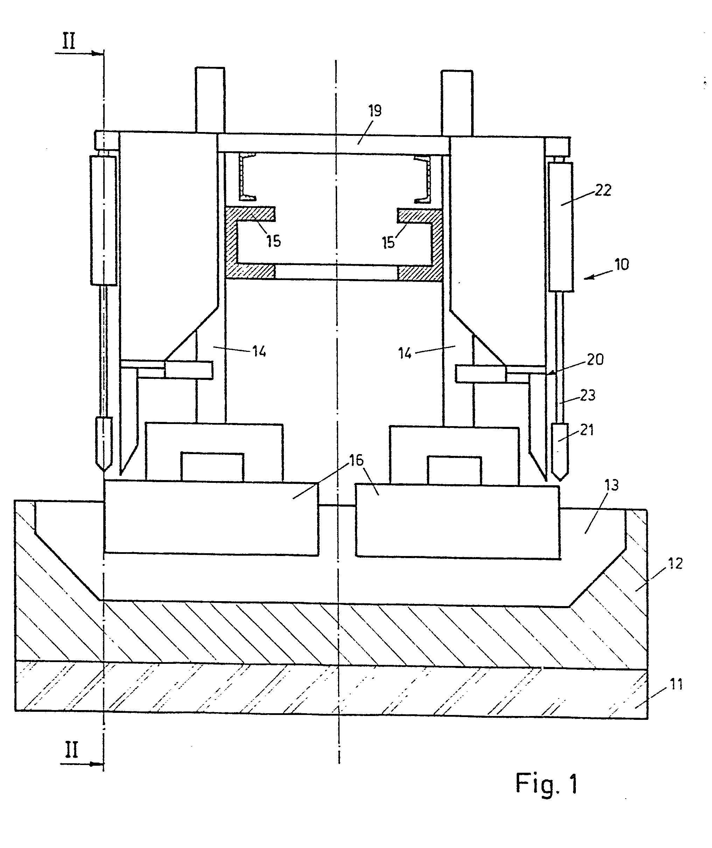

Die in Figur 1 schematisch dargestellte Elektrolysezelle 10 besteht aus einer auf dem Zellenboden 11 gelagerten kathodisch geschalteten Wanne 12 für ein Elektrolysebad 13 in das ein mittels Trägern 14 an einer Traverse 15 angebrachtes Anodenpaar 16 eintaucht.

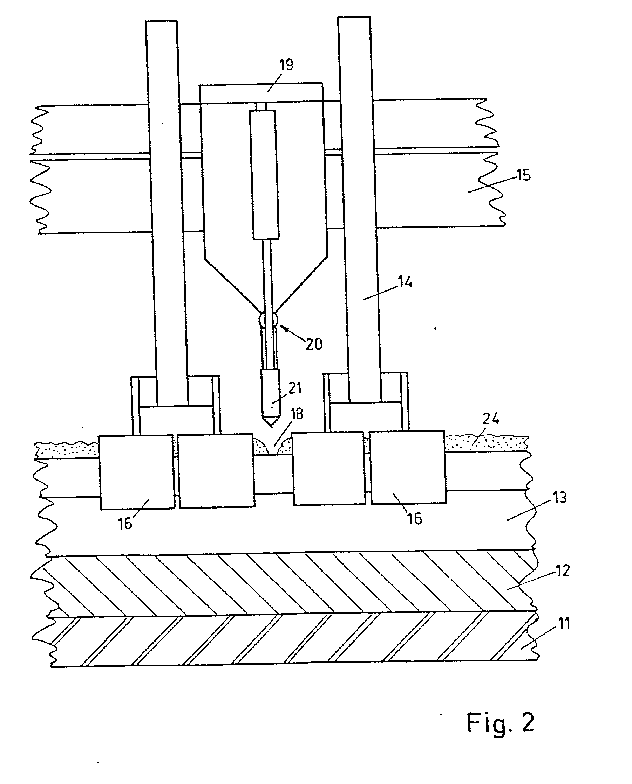

Zwischen zwei benachbarten Anodenpaaren 16 bildet sich durch Verschieben der an der Traverse 15 lösbar befestigten Träger 14 ein Zwischenraum 18 (Fig.2) über dem eine Dosiervorrichtung 20 und ein Krustenbrecher 21 gegebenenfalls beweglich an einem Querträger 19 angebracht sind.

Der Krustenbrecher 21 wird durch eine - vorzugsweise pneumatische - Antriebsvorrichtung 22, mit der er über eine Verbindungsstange 23 verbunden ist, nach unten bewegt, wobei er die auf dem Elektrolysebad 13 gebildete Kruste 24 durchschlägt.

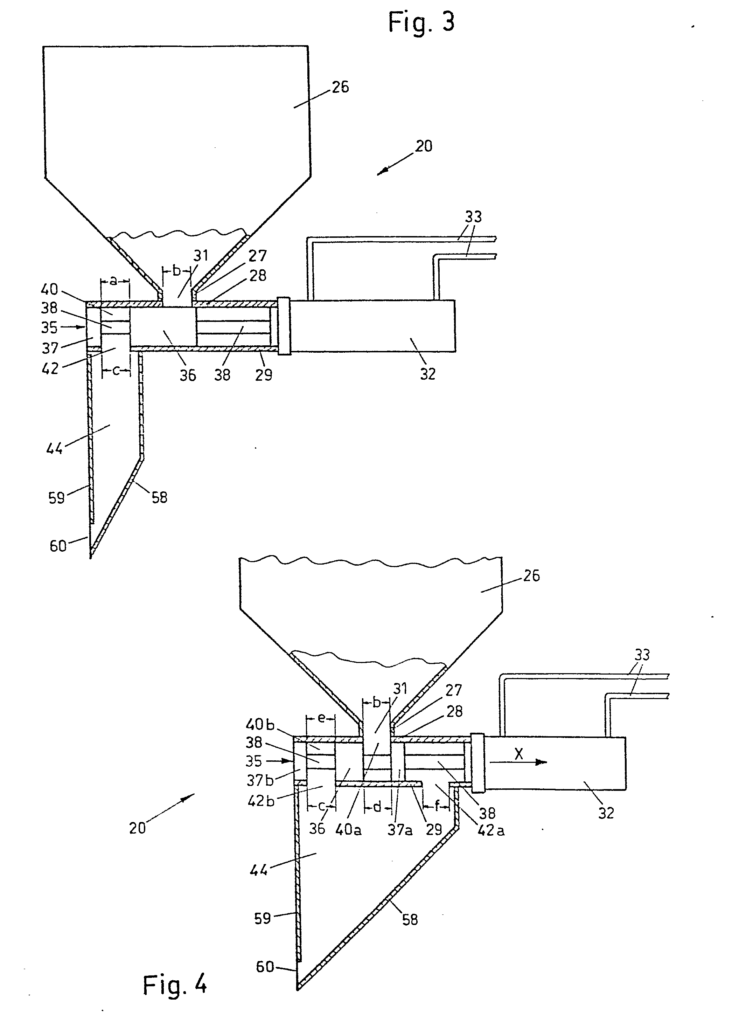

Die Dosiervorrichtung 20 besteht in Fig. 3 aus einem Tonerdesilo 26, dass sich trichterförmig zu einem Einfüllstutzen 27 verjüngt. Der Einfüllstutzen 27 sitzt auf einer Wandung 28 eines Führungsrohres 29 auf, wobei die Wandung 28 zum Einfüllstutzen 27 durch eine Einfüllöffnung 31 mit einer Breite b unterbrochen ist.

An dem Führungsrohr 29 ist ein über Leitungen 33 - vorzugsweise pneumatisch - gesteuerter Antrieb 32 angebracht, mittels dessen ein Kolbensystem 35 in dem Führungsrohr 29 bewegt wird. Das Kolbensystem 35 besteht aus einem die Einfüllöffnung 31 abschliessenden Verschlusskolben 36 und einem Dosierkolben 37, wobei die Stirnseiten beider Kolben einen Dosierraum 40 mit einer gegebenenfalls verstellbaren Breite a bilden und beide Kolben über ein Gestänge 38 mit dem Antrieb 32 verbunden sind.

Zum Füllen des Dosierraumes 40 wird der Verschlusskolben 36 durch den Antrieb 32 über das Gestänge 38 zurückgezogen bis der Dosierraum 40 unter der Einfüllöffnung 31 liegt. In dieser Lage kann die Tonerde aus dem Tonerdesilo durch den Einfüllstutzen 27 und die Einfüllöffnung 31 in den Dosierraum 40 fliessen. Die Gegenbewegung des Antriebs 32 verschiebt den mit Tonerde gefüllten Dosierraum 40 über eine zur Einfüllöffnung 31 versetzte in der Wandung 28 des Führungsrohres 29 befindliche Austragsöffnung 42 mit einer Breite c, wobei der Verschlusskolben die Einfüllöffnung 31 verschliesst. Durch die Austragsöffnung 42 fällt der Inhalt der Dosierraum 40 in den Trichter 44, dessen eine Wandung 58 entsprechend der optimalen Fliessbewegung der Tonerde abgeschrägt ist und mit einer anderen Wandung 59 die Zufuhröffnung 60 bildet.

Fig. 4 zeigt eine Dosiervorrichtung 20, bei der beidseits von einem Verschlusskolben 36, Dosierkolben 37a und 37b angeordnet sind und Dosierkolben 37a und 37b Dosierräume 40a und 40b mit einer Breite d bzw. e bilden. Verschlusskolben 36 und Dosierkolben 37a und 37b sind über ein Gestänge 38 mit einem Antrieb 32 verbunden. Beidseits versetzt zur Einfüllöffnung 31 befindet sich jeweils eine Austragsöffnung 42a und 42b mit der Breite c bzw. f. In der in Figur 4 dargestellten Lage wird der Dosierraum 40a zwischen Verschlusskolben 36 und Dosierkolben 37a über den Einfüllstutzen 27 aus dem Tonerdesilo 26 mit Tonerde gefüllt. Bewegt der Antrieb 32 das Gestänge 38 in Richtung X, wird der Dosierraum 40a über die Austragsöffnung 42a geschoben und entleert sich in den Trichter 44. Gleichzeitig verschiebt sich der Dosierraum 40b unter die Einfüllöffnung 31 und wird über den Einfüllstutzen 27 aus dem Tonerdesilo 26 gefüllt. Bei der gegenläufigen Bewegung wird der Dosierraum 40b über die Austragsöffnung 42b geschoben und kann sich entleeren, während gleichzeitig der Dosierraum 40a unter die Einfüllöffnung 31 zu liegen kommt und aus dem Tonerdesilo 26 gefüllt wird.

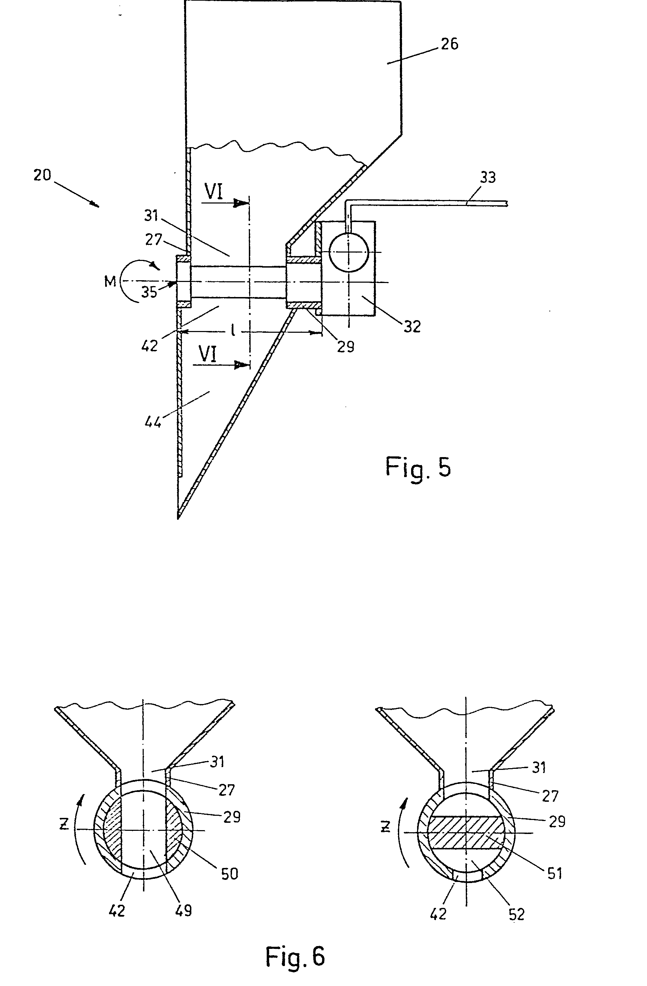

Bei der Dosiervorrichtung 20 in Fig. 5 liegt die Austragsöffnung 42 gegenüber der Einfüllöffnung 31. Dazwischen ist ein in dem Führungsrohr 29 gegebenenfalls über dessen ganze Länge (1) sich erstreckendes Kolbensystem 35 angeordnet und mit dem Antrieb 32 verbunden, mittels welchem es um seine Achse M gedreht wird. Im Bereich zwischen Austragsöffnung 42 und Einfüllöffnung 31 ist das Kolbensystem durch eine Ausnehmung 49 (Fig.6) unterbrochen, die von zwei halbmondförmigen Wandungen 50 begrenzt wird. Durch die Drehbewegung in Richtung Z verschliessen die beiden halbmondförmigen Wandungen 50 die Einfüllöffnung 31 und die Austragsöffnung 42. Durch eine weitere Drehbewegung in Richtung Z bildet die Aussparung 49 mit dem Einfüllstutzen 27, der Einfüllöffnung 31 und der Austragsöffnung 42 einen Kanal, durch den die Tonerde aus dem Tonerdesilo 26 gegebenenfalls in den Trichter 44 abfliessen kann.

Gemäss dem zweiten Ausführungsbeispiel in Fig. 6 ist das Kolbensystem 35 zwischen Austragsöffnung 42 und Einfüllöffnung 31 durch zwei halbmondförmige Dosierräume 52 unterbrochen, die durch eine Scheidewand 51 in der Kolbenachse M getrennt sind. Durch eine Drehbewegung des Kolbensystems 35 in Richtung Z kommt der eine Dosierraum 52 unter die Einfüllöffnung 31 zu liegen, während sich der andere über die Austragsöffnung 42 entleeren kann. Mittels einer weiteren Drehbewegung in Richtung Z um ca. 90° werden Einfüllöffnung 31 und Austragsöffnung 42 durch die Scheidewand 51 verschlossen.

Patentansprüche

1. Vorrichtung zum dosierten Zuführen von Tonerde zum Krustendurchbruch einer Elektrolysezelle mit in einem stehenden Kanal bewegten, an einem Antrieb und einem Tonerdesilo angeschlossenem Förderorgan, dadurch gekennzeichnet, dass der Kanal als unter einer Einfüllöffnung (31) vorgesehenes Führungsrohr (29) für ein Kolbensystem (35) ausgebildet ist, welches wenigstens eine Einformung als begrenzten Dosierraum (40) aufweist.

2. Vorrichtung nach Anspruch 1, dadurch gekennzeichnet, dass das Kolbensystem (35) aus zumindest einem Verschlusskolben (36) und zumindest einem Dosierkolben (37) besteht, wobei die sich gegenüberliegenden Stirnseiten des Verschlusskolbens (36) und des Dosierkolbens (37) den Dosierraum (40) begrenzen, dessen Breite (a) der Breite (b) der Einfüllöffnung (31) entspricht.

3. Vorrichtung nach einem der Ansprüche 1 oder 2, dadurch gekennzeichnet, dass der Dosierraum (40) eine Breite (a) aufweist, welche veränderlich einstellbar ist.

4. Vorrichtung nach wenigstens einem der Ansprüche 1 bis 3, dadurch gekennzeichnet, dass das Führungsrohr (29) eine Austragsöffnung (42) aufweist, die versetzt zur Einfüllöffnung (31) im Führungsrohr (29) eingelassen ist, wobei die Austragsöffnung (42) eine Breite (c) aufweist, die der Breite (b) der Einfüllöffnung (31) entspricht.

5. Vorrichtung nach wenigstens einem der Ansprüche 1 bis 4, dadurch gekennzeichnet, dass das Kolbensystem (35) über den Antrieb (32) und das Gestänge (38) so beweg-

0017612

bar ist, dass der Dosierraum (40) von der Einfüllöffnung (31) zur Austragsöffnung (42) ortsveränderbar ist.

6. Vorrichtung nach wenigstens einem der Ansprüche 1
bis 5, dadurch gekennzeichnet, dass das Kolbensystem (35) aus einem Verschlusskolben (36) und
zwei Dosierkolben (37a, 37b) besteht, wobei die
Dosierkolben (37a, 37b) mit ihren Stirnseiten
und den Stirnseiten des Verschlusskolbens (36)
verstellbare Dosierräume (40a, 40b) bilden.

7. Vorrichtung nach Anspruch 6, dadurch gekennzeichnet,
dass der Verschlusskolben (36) und die zwei Dosierkolben (37a, 37b) so an dem Gestänge (38) bewegbar
angeordnet sind, dass die eine Dosieröffnung (40a
bzw. 40b) über einer Austragsöffnung (42a bzw. 42b)
liegt, wenn die andere Dosieröffnung (40b, 40a) die
Einfüllöffnung (31) frei gibt.

8. Vorrichtung nach Anspruch 1, dadurch gekennzeichnet, dass unterhalb der Einfüllöffnung (31) eine
Austragsöffnung (42) in dem Führungsrohr (29) angeordnet ist.

9. Vorrichtung nach Anspruch 8, dadurch gekennzeichnet, dass das Kolbensystem (35) mit einer Kolbenachse (M) zwischen der Einfüllöffnung (31) und
der Austragungsöffnung (42) zumindest eine Ausnehmung (49, 52) aufweist, wobei das Kolbensystem
(35) in dem Führungsrohr (29) um die Kolbenachse (M)
bewegbar mit einem Antrieb (32) verbunden ist.

10. Vorrichtung nach einem der Ansprüche 8 oder 9, dadurch gekennzeichnet, dass die Ausnehmung (49) von
zwei halbmondförmigen Wandungen (50) begrenzt ist.

11. Vorrichtung nach einem der Ansprüche 8 oder 9,
    dadurch gekennzeichnet, dass in der Kolbenachse
    (M) eine Scheidewand (51) verläuft, die zwei
    halbmondförmige Dosierräume (52) bildet.

Fig. 1

Fig. 2

Fig. 3

Fig. 4

Fig. 5

Fig. 6

Europäisches
Patentamt

**EUROPÄISCHER RECHERCHENBERICHT**

| | EINSCHLÄGIGE DOKUMENTE | | KLASSIFIKATION DER ANMELDUNG (Int Cl.³) |
|---|---|---|---|
| Kategorie | Kennzeichnung des Dokuments mit Angabe, soweit erforderlich, der maßgeblichen Teile | betrifft Anspruch | |
| | <u>GB - A - 1 091 373</u> (A.J. KILEY)<br>* Seite 3, Zeilen 3-42; Figur 3 *<br><br>--<br><br><u>FR - A - 2 147 988</u> (A.I. ZVEREV)<br>* Seite 4, Zeilen 29-37; Seite 5, Zeilen 1-33; Figuren 2-4 *<br><br>--<br><br><u>FR - A - 2 036 439</u> (MANUFACTURE <u>DE MACHINES DU HAUT-RHIN)</u><br>* Seite 1, Zeilen 27-37; Seite 2, Zeilen 1-4; Figuren 1,2 *<br><br>-- | 1<br><br><br>1,2,4,<br>5<br><br><br><br>1,3,8,<br>9,11 | C 25 C  3/14<br>G 01 F  11/18<br>G 01 F  11/24 |
| A | <u>FR - A - 2 099 434</u> (ALCOA)<br><br><br>---- | | **RECHERCHIERTE SACHGEBIETE (Int. Cl.³)**<br><br>C 25 C  3/14<br>B 65 G  65/40<br>G 01 F  11/18<br>G 01 F  11/24 |

**KATEGORIE DER GENANNTEN DOKUMENTE**

X: von besonderer Bedeutung

A: technologischer Hintergrund

O: nichtschriftliche Offenbarung

P: Zwischenliteratur

T: der Erfindung zugrunde liegende Theorien oder Grundsätze

E: kollidierende Anmeldung

D: in der Anmeldung angeführtes Dokument

L: aus andern Gründen angeführtes Dokument

&: Mitglied der gleichen Patentfamilie, übereinstimmendes Dokument

| | Der vorliegende Recherchenbericht wurde für alle Patentansprüche erstellt. | |
|---|---|---|
| **Recherchenort** | **Abschlußdatum der Recherche** | **Prüfer** |
| Den Haag | 30-06-1980 | GROSEILLER |

EPA form 1503.1  06.78